(19) Europäisches Patentamt
European Patent Office
Office européen des brevets

(11) EP 3 765 566 B1

(12) **EUROPEAN PATENT SPECIFICATION**

(45) Date of publication and mention of the grant of the patent:
**06.12.2023 Bulletin 2023/49**

(21) Application number: **19717621.7**

(22) Date of filing: **15.03.2019**

(51) International Patent Classification (IPC):
***C08L 23/12** (2006.01)*

(52) Cooperative Patent Classification (CPC):
(C-Sets available)
**C08L 23/12;** C08L 2207/062 (Cont.)

(86) International application number:
**PCT/JP2019/012287**

(87) International publication number:
**WO 2019/177179 (19.09.2019 Gazette 2019/38)**

(54) **POLYPROPYLENE COMPOSITION AND MOLDED ARTICLE**

POLYPROPYLENZUSAMMENSETZUNG UND FORMARTIKEL

COMPOSITION DE POLYPROPYLÈNE ET ARTICLE MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.03.2018 JP 2018050025**

(43) Date of publication of application:
**20.01.2021 Bulletin 2021/03**

(73) Proprietor: **Basell Poliolefine Italia S.r.l.**
**20121 Milano (IT)**

(72) Inventors:
- **TSUKAHARA, Takeshi**
  **Kawasaki-shi, Kanagawa 2100863 (JP)**
- **TSURUMI, Nobuyuki**
  **Kawasaki-shi, Kanagawa 2100863 (JP)**
- **KANNO, Shitoshi**
  **Kawasaki-shi, Kanagawa 2100863 (JP)**
- **YAMAMOTO, Kunio**
  **Kawasaki-shi, Kanagawa 2100863 (JP)**
- **NAKAJIMA, Takeshi**
  **Kawasaki-shi, Kanagawa 2100863 (JP)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 1 279 699** **EP-A1- 2 338 656**
**EP-A1- 2 592 112** **EP-A1- 2 746 295**
**EP-A2- 0 472 946** **WO-A1-2012/081667**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/12, C08L 23/16, C08K 5/1575**

## Description

Technical Field

The present invention relates to polypropylene compositions and molded articles thereof, and more particularly to polypropylene compositions for injection molding and injection-molded articles thereof.

Background Art

Polypropylene is useful for use in food containers because of having excellent physical properties and also being superior from a hygienic viewpoint. However, there is a problem with polypropylene containers in that those containers are poor in impact resistance during use at low temperatures. Further, there is a demand for polypropylene containers to have sufficient transparency to see their contents, and to offer stiffness required for shape stability. Thus, polypropylene is required to achieve a good balance between transparency, impact resistance at low temperatures (low temperature impact resistance), and stiffness. With the aim of improvement of transparency and low temperature impact resistance, PTL 1 suggests a composition obtained by polymerizing an ethylene/1-butene copolymer containing 74 to 86% by mass of an ethylene unit in the presence of an ethylene/propylene copolymer containing 2.0 to 4.0% by mass of an ethylene unit, wherein the composition has an ethylene/1-butene copolymer content of 10 to 20% by mass. Also, PTL 2 discloses a polypropylene composition comprising a polypropylene copolymer containing 2.0 to 10.0% of an ethylene-derived unit, and an ethylene copolymer containing 70 to 85% of an ethylene-derived unit PTL 3 discloses a polypropylene composition which discloses a component (1) and (2), but does not disclose between 1.5 and 4 wt% ethylene units in component (1) and XSIV, MFR2 and the viscosity ratio as of the present application, which leads to a less favourable puncture resistance.

Citation List

Patent Literatures

PTL 1: Japanese Patent Application Publication No. JP 2012-126829
PTL 2: International Patent Application Domestic Publication No. JP 2013-507497 PTL 3: European Patent Application Publication No. EP 2 746 295 A1

Summary of Invention

Technical Problem

However, the compositions disclosed in the aforementioned patent literatures have not yet achieved a sufficient balance between transparency, low temperature impact resistance, and stiffness. Also, there existed constraints on the production of such compositions when 1-butene was used as a starting material for various reasons, such as poorer reactivity than propylene. In view of these circumstances, the present invention has as its object to provide a polypropylene composition having an excellent balance between transparency, low temperature impact resistance, and stiffness.

Solution to Problem

The present inventors found that the aforementioned object can be achieved by optimizing various parameters, such as an intrinsic viscosity ratio of an ethylene/propylene copolymer containing 65 to 87% by weight of an ethylene-derived unit (component (2)) to a propylene/ethylene copolymer containing more than 1.5% by weight of an ethylene-derived unit (component (1)). More specifically, the aforementioned object is achieved by the invention defined below.

[1] A polypropylene composition comprising:

as component (1), a propylene/ethylene copolymer containing more than 1.5% by weight and not more than 4% by weight of an ethylene-derived unit;
as component (2), an ethylene/propylene copolymer containing 65 to 87% by weight of an ethylene-derived unit; and
0.01 to 0.5 parts by weight of a crystal nucleating agent, based on a total of 100 parts by weight of component

(1) and component (2);
wherein the polypropylene composition satisfies the following requirements:

1) the weight ratio of component (1) to component (2) is in the range of 80:20 to 90:10,
2) the intrinsic viscosity of xylene solubles (XSIV) of the composition is in the range of 0.8 to 1.4 dl/g,
3) the MFR (at 230°C under a load of 2.16 kg) of the composition is in the range of 5 to 15 g/10 min.,
4) the viscosity ratio defined below is in the range of 0.40 to 0.80:

$$\text{Viscosity ratio} = \frac{\text{XSIV as defined above}}{\text{Intrinsic viscosity of component (1)}}.$$

[2] The polypropylene composition as set forth in [1], wherein the ethylene-derived unit in component (1) is present at a concentration of 1.8 to 4% by weight.
[3] The polypropylene composition as set forth in [1] or [2], wherein the viscosity ratio defined above is preferably in the range of 0.45 to 0.75, more preferably 0.50 to 0.70.
[4] The polypropylene composition as set forth in any of [1] to [3], wherein components (1) and (2) are copolymers obtained by polymerizing propylene and ethylene using a catalyst comprising:

(a) a solid catalyst comprising, as essential components, magnesium, titanium, a halogen, and an electron donor compound selected from succinate-based compounds, and
(b) an organoaluminum compound and
(c) optionally an external electron donor compound.

[5] An injection-molded article of the polypropylene composition as set forth in any of [1] to [4].

Advantageous Effect of Invention

The present invention can provide a polypropylene composition having an excellent balance between transparency, low temperature impact resistance, and stiffness.

Description of Embodiments

Hereunder, the present invention will be described in detail. It should be noted that numerical ranges defined as "X to Y" include both endpoints X and Y.

1. Polypropylene composition

The polypropylene composition of the present invention comprises components (1) and (2) as defined below, and a crystal nucleating agent:

component (1): a propylene/ethylene copolymer containing more than 1.5% by weight and not more than 4% by weight of an ethylene-derived unit,
component (2): an ethylene/propylene copolymer containing 65 to 87% by weight of an ethylene-derived unit.

(1) Component (1)

Component (1) is a propylene/ethylene copolymer containing more than 1.5% by weight of an ethylene-derived unit. A propylene/ethylene copolymer containing 1.5% by weight of an ethylene-derived unit refers to a copolymer composed of an ethylene-derived unit and a propylene-derived unit at a weight ratio of 1.5:98.5. Other copolymers are also understood in the same way. The upper limit of the ethylene-derived unit content in component (1) is not more than 4% by weight, preferably not more than 3.8% by weight. When this content exceeds the upper limit, not only a decrease in transparency occurs, but also polymer particles charged in polymerization plant equipment become easy to adhere to each other or to an inner wall of the equipment, thereby leading to difficulty in production. Further, a decrease in stiffness arises. The lower limit of the ethylene-derived unit content in component (1) is more than 1.5% by weight, preferably not less than 1.8% by weight. When this content falls below the lower limit, a decrease in transparency and low temperature impact resistance occurs. Component (1) is preferably a random copolymer. The MFR of component

(1) is preferably in the range of 6 to 15 g/10 min.

(2) Component (2)

Component (2) is an ethylene/propylene copolymer containing 65 to 87% by weight of an ethylene-derived unit. The upper limit of the ethylene-derived unit content in component (2) is not more than 87% by weight, preferably not more than 86% by weight. When this content exceeds the upper limit, a decrease in transparency and low temperature impact resistance occurs. The lower limit of the ethylene-derived unit content in component (2) is not less than 65% by weight, preferably not less than 68% by weight, more preferably not less than 69% by weight. When this content falls below the lower limit, a decrease in transparency occurs.

(3) Crystal nucleating agent

The polypropylene composition of the present invention contains a crystal nucleating agent. The crystal nucleating agent is an additive used to improve stiffness by increasing a crystallization rate and also to particularly improve transparency by controlling to decrease the size of a crystalline component in a resin. The crystal nucleating agent to be used is not particularly limited, and any crystal nucleating agent commonly used in the art can be used, but the crystal nucleating agent is preferably selected from organic nucleating agents such as nonitol nucleating agents, sorbitol nucleating agents, phosphoric ester nucleating agents, triaminobenzene derivative nucleating agents, metal carboxylate nucleating agents, xylitol nucleating agents, and rosin-based nucleating agents. Exemplary nonitol nucleating agents include 1,2,3-trideoxy-4,6:5,7-bis-[(4-propylphenyl)methylene]-nonitol. Exemplary sorbitol nucleating agents include 1,3:2,4-bis-o-(3,4-dimethylbenzylidene)-D-sorbitol. Exemplary phosphoric ester nucleating agents include aromatic phosphoric ester nucleating agents such as phosphoric acid-2,2'-methylenebis(4,6-di-t-butylphenyl)sodium salt, phosphoric acid-2,2'-methylenebis(4,6-di-tert-butylphenyl)aluminum salt, and phosphoric acid-2,2'-methylenebis(4,6-di-tert-butylphenyl)lithium salt. Exemplary triaminobenzene derivative nucleating agents include 1,3,5-tris(2,2-dimethylpropanamide)benzene. Exemplary metal carboxylate nucleating agents include sodium adipate, potassium adipate, aluminum adipate, sodium sebacate, potassium sebacate, aluminum sebacate, sodium benzoate, aluminum benzoate, aluminum di-para-t-butylbenzoate, titanium di-para-t-butylbenzoate, chromium di-para-t-butylbenzoate, and aluminum hydroxy-di-t-butylbenzoate. Exemplary xylitol nucleating agents include bis-1,3:2,4-(5',6',7',8'-tetrahydro-2-naphthaldehydebenzylidene)-1-allyl-xylitol, and bis-1,3:2,4-(3',4'-dimethylbenzylidene)-1-propyl-xylitol. Exemplary rosin-based nucleating agents include partial metal salts of rosin acid, such as partial sodium salt of rosinic acid, partial potassium salt of rosinic acid, or partial magnesium salt of rosinic acid. One of the aforementioned crystal nucleating agents may be used alone, or two or more of them may be used in combination.

In the present invention, the crystal nucleating agent can be added through the use of a master batch composed of a crystal nucleating agent and an olefinic polymer. Where the matrix polymer in the master batch comprises component (1) or component (2), the amount of the master batch, and the concentration of the crystal nucleating agent in the master batch are adjusted so as to ensure that the weight ratio of component (1) to component (2) in the polypropylene composition of this invention falls within the range described below. Where the matrix polymer does not comprise component (1) or component (2), the polypropylene composition of this invention is to contain the matrix polymer as any other component described below.

(4) Composition ratio

The relative ratio (weight ratio) of component (1) to component (2) is in the range of 80:20 to 90:10, preferably in the range of 81:19 to 89:11, more preferably in the range of 83:17 to 89:11. When the content of component (1) exceeds the upper limit, a decrease in low temperature impact resistance occurs. When the content of component (1) falls below the lower limit, a decrease in not only transparency but also stiffness can occur.

The content of the crystal nucleating agent is preferably in the range of 0.01 to 0.5 parts by weight, more preferably in the range of 0.01 to 0.45 parts by weight, still more preferably in the range of 0.015 to 0.45 parts by weight, based on the total content of components (1) and (2) (hereinafter also referred to as "resin components") which is 100 parts by weight. When no crystal nucleating agent is incorporated, no satisfactory transparency can be obtained, and moreover a decrease in stiffness occurs. Even when the crystal nucleating agent is incorporated in an amount exceeding the upper limit mentioned above, the crystal nucleation promoting effect reaches a plateau, merely resulting in an increase in production cost; so, it is not realistic to do so from the viewpoint of industrial production at large quantities and at low cost.

(4) Characteristic features

1) XSIV

The intrinsic viscosity of xylene solubles (XSIV) of the polypropylene composition of the present invention is an index for the molecular weight of a non-crystalline component in the composition. XSIV is determined by obtaining a component soluble in xylene at 25°C and measuring the intrinsic viscosity of this component by a conventional procedure. In this invention, XSIV is in the range of 0.8 to 1.4 dl/g. When XSIV exceeds the upper limit, a decrease in transparency occurs. When XSIV falls below the lower limit, the polypropylene composition becomes difficult to produce. From this viewpoint, it is preferred that XSIV be in the range of 0.8 to 1.3 dl/g.

2) MFR

The MFR (melt mass-flow rate) of the polypropylene composition of the present invention is in the range of 5 to 15 g/10 min., as measured at a temperature of 230°C under a load of 2.16 kg. When MFR exceeds the upper limit, a decrease in low temperature impact resistance occurs. When MFR falls below the lower limit, injection molding becomes difficult for the polypropylene composition. From this viewpoint, it is preferred that MFR be in the range of 7 to 15 g/10 min. The MFR of component (1) can be determined by the aforementioned procedure after component (1) is synthesized separately.

3) Viscosity ratio

The viscosity ratio defined as a ratio of the XSIV of the polypropylene composition of the present invention to the intrinsic viscosity of component (1) is in the range of 0.40 to 0.80. This is a ratio of the intrinsic viscosity (IV) used as an index for the molecular weight of a non-crystalline component (XS) with respect to the intrinsic viscosity (IV) used as an index for the molecular weight of component (1) mainly constituting a crystalline component. When this ratio falls within the range of 0.40 to 0.80, an optimum balance between transparency and low temperature impact resistance is achieved. The reason for this is speculated to be as follows, without limitation. In the polypropylene composition of this invention, a non-crystalline component corresponding to XS mainly derived from component (2) forms a disperse phase in a matrix composed of a crystalline component mainly derived from component (1). When this viscosity ratio falls within the aforementioned range, the disperse phase is considered to be finely dispersed during a kneading process in a pelletizer or in an extruder of molding machine or the like, thereby achieving an optimum balance between transparency and low temperature impact resistance. In view of the above, the above-described viscosity ratio is preferably in the range of 0.45 to 0.75, more preferably 0.50 to 0.70.

The intrinsic viscosity of component (1) can be determined by a conventional procedure after component (1) is synthesized separately.

4) Structure

The polypropylene composition of the present invention is preferred to have a phase structure in which component (2) is dispersed in component (1).

(5) Other components

The polypropylene composition of the present invention may have added thereto any conventional additives commonly used in the art, such as antioxidant, chlorine absorber, heat-resistant stabilizer, light stabilizer, ultraviolet absorber, internal lubricant, external lubricant, antiblocking agent, antistatic agent, antifogging agent, flame retardant, dispersant, copper inhibitor, neutralizer, plasticizer, foam inhibitor, crosslinking agent, peroxide, extender oil, and other organic and inorganic pigments. Such additives can be added in known amounts. Also, the polypropylene composition of this invention may contain one or more types of resin or elastomer other than the resin components mentioned above to the extent that the effects of this invention are not impaired. Further, as described above, in this invention, a crystal nucleating agent can be added through the use of a master batch composed of a crystal nucleating agent and an olefinic polymer. Where the matrix polymer in the master batch is different from components (1) and (2), the polypropylene composition of this invention may contain said matrix polymer.

2. Production method

The aforementioned components can be produced by any given method, but are preferably obtained by a

method comprising the step of polymerizing the starting monomers of components (1) and (2) using a catalyst comprising (a) a solid catalyst comprising magnesium, titanium, a halogen, and an internal electron donor compound, (b) an organoaluminum compound, and optionally (c) an external electron donor compound. Examples of the internal electron donor compound include succinate-based compounds, phthalate-based compounds, and diether-based compounds. Any of these compounds can be used, but from the viewpoint of a balance between flowability, transparency, low temperature impact resistance, and stiffness in the resulting composition, a succinate-based compound is preferably used.

(1) Solid catalyst (component (a))

Component (a) can be prepared by a known method, for example, by contacting a magnesium compound, a titanium compound, and an electron donor compound with each other.

The titanium compound used to prepare component (a) is preferably a tetravalent titanium compound represented by the general formula: $Ti(OR)_gX_{4-g}$. In this formula, R is a hydrocarbon group, X is a halogen, and $0 \leq g \leq 4$. The titanium compound is more specifically exemplified by titanium tetrahalides such as $TiCl_4$, $TiBr_4$, and $TiI_4$; alkoxytitanium trihalides such as $Ti(OCH_3)Cl_3$, $Ti(OC_2H_5)Cl_3$, $Ti(O_n\text{-}C_4H_9)Cl_3$, $Ti(OC_2H_5)Br_3$, and $Ti(OisoC_4H_9)Br_3$; alkoxytitanium dihalides such as $Ti(OCH_3)_2Cl_2$, $Ti(OC_2H_5)_2Cl_2$, $Ti(O_n\text{-}C_4H_9)_2Cl_2$, and $Ti(OC_2H_5)_2Br_2$; trialkoxytitanium monohalides such as $Ti(OCH_3)_3Cl$, $Ti(OC_2H_5)_3Cl$, $Ti(O_n\text{-}C_4H_9)_3Cl$, and $Ti(OC_2H_5)_3Br$; and tetraalkoxytitaniums such as $Ti(OCH_3)_4$, $Ti(OC_2H_5)_4$, and $Ti(O_n\text{-}C_4H_9)_4$. Among them, halogen-containing titanium compounds are preferred, titanium tetrahalogenides are particularly preferred, and titanium tetrachlorides are more particularly preferred.

Examples of the magnesium compound used to prepare component (a) include magnesium compounds having a magnesium-carbon bond or a magnesium-hydrogen bond, such as dimethylmagnesium, diethylmagnesium, dipropylmagnesium, dibutylmagnesium, diamylmagnesium, dihexylmagnesium, didecylmagnesium, ethylmagnesium chloride, propylmagnesium chloride, butylmagnesium chloride, hexylmagnesium chloride, amylmagnesium chloride, butylethoxymagnesium, ethylbutylmagnesium, and butylmagnesium hydride. Such magnesium compounds can be used in the form of, for example, a complex compound with an organoaluminum or the like, and can be in liquid or solid form. More preferred examples of the magnesium compound include magnesium halides such as magnesium chloride, magnesium bromide, magnesium iodide, and magnesium fluoride; alkoxymagnesium halides such as methoxymagnesium chloride, ethoxymagnesium chloride, isopropoxymagnesium chloride, butoxymagnesium chloride, and octoxymagnesium chloride; allyloxymagnesium halides such as phenoxymagnesium chloride and methylphenoxymagnesium chloride; alkoxymagnesiums such as ethoxymagnesium, isopropoxymagnesium, butoxymagnesium, n-octoxymagnesium, and 2-ethylhexoxymagnesium; allyloxymagnesiums such as phenoxymagnesium and dimethylphenoxymagnesium; and magnesium carboxylates such as magnesium laurate and magnesium stearate.

The electron donor compound used to prepare component (a) is generally referred to as an "internal electron donor compound." In the present invention, it is preferred to use an internal electron donor compound that provides a wide molecular weight distribution. It is generally expected that injection moldability (flowability and swell) is enhanced by widening a molecular weight distribution. The molecular weight distribution values of components (1) and (2) are preferably in the range of 6 to 20 as expressed by the index of Mw/Mn measured by GPC (gel permeation chromatography). Said Mw/Mn values are preferably in the range of 7 to 20, more preferably in the range of 8 to 20, most preferably in the range of 9 to 20. While it is known that polymer blending or multi-stage polymerization can achieve an increase in molecular weight distribution, the compositions obtained by polymerization using the aforementioned catalyst exhibit various superior properties, such as impact resistance and injection moldability, over compositions with the same molecular weight distribution obtained by powder- or pellet-blending polymers polymerized using other catalysts, and compositions with the same molecular weight distribution obtained by multi-stage polymerization. The reason for this is considered to be as follows: in the former compositions produced using this catalyst, high-molecular-weight and low-molecular-weight components are integrated at a near-molecular level, whereas in the latter compositions, those components are not mixed at a near-molecular level, so that those compositions merely show apparently the same molecular weight distribution. The following will describe preferred internal electron donor compounds.

Preferred electron donor compounds in the present invention are succinate-based compounds. As referred to herein, the "succinate-based compounds" refers to diesters of succinic acid or diesters of substituted succinic acid. The following will describe the details of succinate-based compounds. The succinate-based compounds preferably used in this invention are represented by formula (I) shown below:

[Chem. 1]

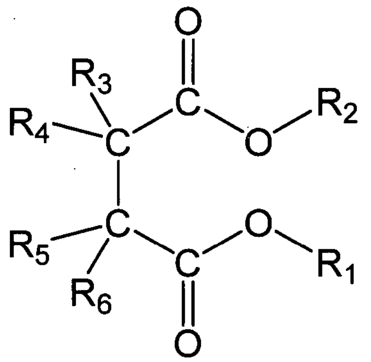

(I)

In this formula, the groups $R_1$ and $R_2$ are the same as or different from each other, and are each a $C_1$ to $C_{20}$ linear or branched alkyl, alkenyl, cycloalkyl, aryl, arylalkyl, or alkylaryl group optionally containing a heteroatom; and the groups $R_3$ to $R_6$ are the same as or different from each other, and are each a $C_1$ to $C_{20}$ linear or branched alkyl, alkenyl, cycloalkyl, aryl, arylalkyl, or alkylaryl group containing hydrogen or optionally containing a heteroatom, and the groups $R_3$ to $R_6$ attached to the same carbon atom or to different carbon atoms may be taken together to form a ring.

$R_1$ and $R_2$ are preferably $C_1$ to $C_8$ alkyl, cycloalkyl, aryl, arylalkyl, or alkylaryl groups. Particularly preferred are those compounds wherein $R_1$ and $R_2$ are selected from primary alkyls, in particular, branched primary alkyls. Preferred examples of the groups $R_1$ and $R_2$ include $C_1$ to $C_8$ alkyl groups, such as methyl, ethyl, n-propyl, n-butyl, isobutyl, neopentyl, and 2-ethylhexyl. Ethyl, isobutyl, and neopentyl are particularly preferred.

One preferred group of the compounds represented by formula (I) are those compounds wherein $R_3$ to $R_5$ are each hydrogen, and $R_6$ is a branched alkyl, cycloalkyl, aryl, arylalkyl, or alkylaryl group having 3 to 10 carbon atoms. Preferred specific examples of such monosubstituted succinate compounds include diethyl-sec-butyl succinate, diethyl thexylsuccinate, diethyl cyclopropylsuccinate, diethyl norbornylsuccinate, diethyl perihydrosuccinate, diethyl trimethylsilylsuccinate, diethyl methoxysuccinate, diethyl-p-methoxyphenylsuccinate, diethyl-p-chlorophenylsuccinate, diethyl phenylsuccinate, diethyl cyclohexylsuccinate, diethyl benzylsuccinate, diethyl cyclohexylmethylsuccinate, diethyl-t-butylsuccinate, diethyl isobutylsuccinate, diethyl isopropylsuccinate, diethyl neopentylsuccinate, diethyl isopentylsuccinate, diethyl (1-trifluoromethylethyl)succinate, diethyl fluorenylsuccinate, 1-ethoxycarbo diisobutyl phenylsuccinate, diisobutyl-sec-butylsuccinate, diisobutyl thexylsuccinate, diisobutyl cyclopropylsuccinate, diisobutyl norbornylsuccinate, diisobutyl perihydrosuccinate, diisobutyl trimethylsilylsuccinate, diisobutyl methoxysuccinate, diisobutyl-p-methoxyphenylsuccinate, diisobutyl-p-chlorophenylsuccinate, diisobutyl cyclohexylsuccinate, diisobutyl benzylsuccinate, diisobutyl cyclohexylmethylsuccinate, diisobutyl-t-butylsuccinate, diisobutyl isobutylsuccinate, diisobutyl isopropylsuccinate, diisobutyl neopentylsuccinate, diisobutyl isopentylsuccinate, diisobutyl (1-trifluoromethylethyl)succinate, diisobutyl fluorenylsuccinate, dineopentyl-sec-butyl-succinate, dineopentyl thexylsuccinate, dineopentyl cyclopropylsuccinate, dineopentyl norbornylsuccinate, dineopentyl perihydrosuccinate, dineopentyl trimethylsilylsuccinate, dineopentyl methoxysuccinate, dineopentyl-p-methoxyphenylsuccinate, dineopentyl-p-chlorophenylsuccinate, dineopentyl phenylsuccinate, dineopentyl cyclohexylsuccinate, dineopentyl benzylsuccinate, dineopentyl cyclohexylmethylsuccinate, dineopentyl-t-butylsuccinate, dineopentyl isobutylsuccinate, dineopentyl isopropylsuccinate, dineopentyl neopentylsuccinate, dineopentyl isopentylsuccinate, dineopentyl (1-trifluoromethylethyl)succinate, and dineopentyl fluorenylsuccinate.

Another preferred group of the compounds within the scope of formula (I) are those compounds wherein at least two of the groups $R_3$ to $R_6$ are different from hydrogen, and are selected from $C_1$ to $C_{20}$ linear or branched alkyl, alkenyl, cycloalkyl, aryl, arylalkyl, or alkylaryl groups optionally containing a heteroatom. Particularly preferred are those compounds wherein the two groups different from hydrogen are attached to the same carbon atom. More specifically, such compounds are those wherein $R_3$ and $R_4$ are groups different from hydrogen, and $R_5$ and $R_6$ are hydrogen atoms. Preferred specific examples of such disubstituted succinate compounds include diethyl-2,2-dimethylsuccinate, diethyl-2-ethyl-2-methyl succinate, diethyl-2-benzyl-2-isopropylsuccinate, diethyl-2-cyclohexylmethyl-2-isobutylsuccinate, diethyl-2-cyclopentyl-2-n-butylsuccinate, diethyl-2,2-diisobutylsuccinate, diethyl-2-cyclohexyl-2-ethylsuccinate, diethyl-2-isopropyl-2-methylsuccinate, diethyl-2-tetradecyl-2-ethylsuccinate, diethyl-2-isobutyl-2-ethylsuccinate, diethyl-2-(1-trifluoromethylethyl)-2-methylsuccinate, diethyl-2-isopentyl-2-isobutylsuccinate, diethyl-2-phenyl-2-n-butylsuccinate, diisobutyl-2,2-dimethylsuccinate, diisobutyl-2-ethyl-2-methylsuccinate, diisobutyl-2-benzyl-2-isopropylsuccinate, diisobutyl-2-cyclohexylmethyl-2-isobutylsuccinate, diisobutyl-2-cyclopentyl-2-n-butylsuccinate, diisobutyl-2,2-diisobutylsuccinate, diisobutyl-2-cyclohexyl-2-ethylsuccinate, diisobutyl-2-isopropyl-2-methylsuccinate, diisobutyl-2-tetradecyl-2-ethylsuccinate, diisobutyl-2-isobutyl-2-ethylsuccinate, diisobutyl-2-(1-trifluoromethylethyl)-2-methylsuccinate, diisobutyl-2-isopentyl-2-isobutylsuccinate, diisobutyl-2-phenyl-2-n-butylsuccinate, dineopentyl-2,2-dimethylsuccinate, dineopentyl-2-ethyl-2-methylsuccinate, dineopentyl-2-benzyl-2-isopropylsuccinate, dineopentyl-2-cyclohexylmethyl-2-isobutylsuccinate, dineopentyl-2-cyclopentyl-2-n-butylsuccinate, dineopentyl-2,2-diisobutylsuccinate, dineopentyl-2-cyclohexyl-2-ethylsuccinate, dineopentyl-2-isopropyl-2-methylsuccinate, dineopentyl-2-tetradecyl-2-ethylsuccinate, dineopentyl-2-isobutyl-2-ethylsuccinate, dineopentyl-2-(1-trifluoromethylethyl)-2-methylsuccinate, dineopentyl-2-isopentyl-2-isobutylsuccinate, and dineopentyl-2-phenyl-2-n-butylsuccinate.

Also, particularly preferred are those compounds wherein at least two groups different from hydrogen are attached to different carbon atoms. More specifically, such compounds are those wherein $R_3$ and $R_5$ are groups different from hydrogen. In this case, $R_4$ and $R_6$ may be hydrogen atoms or groups different from hydrogen, but it is preferred that one of them be a hydrogen atom (trisubstituted succinates). Preferred specific examples of such compounds include diethyl-2,3-bis(trimethylsilyl)succinate, diethyl-2,2-sec-butyl-3-methylsuccinate, diethyl-2-(3,3,3-trifluoropropyl)-3-methylsuccinate, diethyl-2,3-bis(2-ethylbutyl)succinate, diethyl-2,3-diethyl-2-isopropylsuccinate, diethyl-2,3-diisopropyl-2-methylsuccinate, diethyl-2,3-dicyclohexyl-2-methyldiethyl-2,3-dibenzylsuccinate, diethyl-2,3-diisopropylsuccinate, diethyl-2,3-bis(cyclohexylmethyl)succinate, diethyl-2,3-di-t-butylsuccinate, diethyl-2,3-diisobutylsuccinate, diethyl-2,3-dineopentylsuccinate, diethyl-2,3-diisopentylsuccinate, diethyl-2,3-(1-trifluoromethylethyl)succinate, diethyl-2,3-tetradecylsuccinate, diethyl-2,3-fluorenylsuccinate, diethyl-2-isopropyl-3-isobutylsuccinate, diethyl-2-tert-butyl-3-isopropylsuccinate, diethyl-2-isopropyl-3-cyclohexylsuccinate, diethyl-2-isopentyl-3-cyclohexylsuccinate, diethyl-2-tetradecyl-3-cyclohexylmethylsuccinate, diethyl-2-cyclohexyl-3-cyclopentylsuccinate, diisobutyl-2,3-diethyl-2-isopropylsuccinate, diisobutyl-2,3-diisopropyl-2-methylsuccinate, diisobutyl-2,3-dicyclohexyl-2-methylsuccinate, diisobutyl-2,3-dibenzylsuccinate, diisobutyl-2,3-diisopropylsuccinate, diisobutyl-2,3-bis(cyclohexylmethyl)succinate, diisobutyl-2,3-di-t-butylsuccinate, diisobutyl-2,3-diisobutylsuccinate, diisobutyl-2,3-dineopentylsuccinate, diisobutyl-2,3-diisopentylsuccinate, diisobutyl-2,3-(1-trifluoromethylethyl)succinate, diisobutyl-2,3-tetradecylsuccinate, diisobutyl-2,3-fluorenylsuccinate, diisobutyl-2-isopropyl-3-isobutylsuccinate, diisobutyl-2-tert-butyl-3-isopropylsuccinate, diisobutyl-2-isopropyl-3-cyclohexylsuccinate, diisobutyl-2-isopentyl-3-cyclohexylsuccinate, diisobutyl-2-tetradecyl-3-cyclohexylmethylsuccinate, diisobutyl-2-cyclohexyl-3-cyclopentylsuccinate, dineopentyl-2,3-bis(trimethylsilyl)succinate, dineopentyl-2,2-sec-butyl-3-methylsuccinate, dineopentyl-2-(3,3,3-trifluoropropyl)-3-methylsuccinate, dineopentyl-2,3-bis(2-ethylbutyl)succinate, dineopentyl-2,3-diethyl-2-isopropylsuccinate, dineopentyl-2,3-diisopropyl-2-methylsuccinate, dineopentyl-2,3-dicyclohexyl-2-methylsuccinate, dineopentyl-2,3-dibenzylsuccinate, dineopentyl-2,3-diisopropylsuccinate, dineopentyl-2,3-bis(cyclohexylmethyl)succinate, dineopentyl-2,3-di-t-butylsuccinate, dineopentyl-2,3-diisobutylsuccinate, dineopentyl-2,3-dineopentylsuccinate, dineopentyl-2,3-diisopentylsuccinate, dineopentyl-2,3-(1-trifluoromethylethyl)succinate, dineopentyl-2,3-tetradecylsuccinate, dineopentyl-2,3-fluorenylsuccinate, dineopentyl-2-isopropyl-3-isobutylsuccinate, dineopentyl-2-tert-butyl-3-isopropylsuccinate, dineopentyl-2-isopropyl-3-cyclohexylsuccinate, dineopentyl-2-isopentyl-3-cyclohexylsuccinate, dineopentyl-2-tetradecyl-3-cyclohexylmethylsuccinate, and dineopentyl-2-cyclohexyl-3-cyclopentylsuccinate.

Also, those compounds of formula (I) wherein some of the group $R_3$ to $R_6$ are joined together to form a ring can be preferably used. Examples of such compounds include those mentioned in International Patent Application Domestic Publication No. JP 2002-542347, such as 1-(ethoxycarbonyl)-1-(ethoxyacetyl)-2,6-dimethylcyclohexane, 1-(ethoxycarbonyl)-1-(ethoxyacetyl)-2,5-dimethylcyclopentane, 1-(ethoxycarbonyl)-1-(ethoxyacetylmethyl)-2-methylcyclohexane, and 1-(ethoxycarbonyl)-1-(ethoxy(cyclohexyl)acetyl)cyclohexane. Further, cyclic succinate compounds as disclosed in International Patent Publication No. WO 2009/069483, such as diisobutyl 3,6-dimethylcyclohexane-1,2-dicarboxylate and diisobutyl cyclohexane-1,2-dicarboxylate, can be preferably used. Other preferred examples of cyclic succinate compounds include those disclosed in International Patent Publication No. WO 2009/057747.

In the case of those compounds of formula (I) wherein the groups $R_3$ to $R_6$ contain a heteroatom, the heteroatom is preferably a Group 15 atom including nitrogen and phosphorus or a Group 16 atom including oxygen and sulfur. Examples of those compounds wherein the groups $R_3$ to $R_6$ contain a Group 15 atom include the compounds disclosed in Japanese Patent Application Publication No. JP 2005-306910. Examples of those compounds wherein the groups $R_3$ to $R_6$ contain a Group 16 atom include the compounds disclosed in Japanese Patent Application Publication No. JP 2004-131537.

Other internal electron donor compounds that provide a comparable molecular weight distribution to that provided by the succinate-based compounds may also be used. Examples of such other compounds include diphenyl dicarboxylic acid esters as described in Japanese Patent Application Publication No. JP 2013-28704, cyclohexene dicarboxylic acid esters as disclosed in Japanese Patent Application Publication No. JP 2014-201602, dicycloalkyl dicarboxylic acid esters as disclosed in Japanese Patent Application Publication No. JP 2013-28705, diol dibenzoates as disclosed in Japanese Patent No. 4959920, and 1,2-phenylene dibenzoates as disclosed in International Patent Publication No. WO 2010/078494.

(2) Organoaluminum compound (component (b))

Examples of the organoaluminum compound as component (b) include:

trialkylaluminums such as triethylaluminum and tributylaluminum;
trialkenylaluminums such as triisoprenylaluminum;
dialkylaluminum alkoxides such as diethylaluminum ethoxide and dibutylaluminum butoxide;
alkylaluminum sesquialkoxides such as ethylaluminum sesquiethoxide and butylaluminum sesquibutoxide;
partially halogenated alkylaluminums, for example, alkylaluminum dihalogenides such as ethylaluminum dichloride, propylaluminum dichloride, and butylaluminum dibromide;
dialkylaluminum hydrides such as diethylaluminum hydride and dibutylaluminum hydride;
partially hydrogenated alkylaluminums, for example, alkylaluminum dihydrides such as ethylaluminum dihydride and propylaluminum dihydride; and
partially alkoxylated and halogenated alkylaluminums such as ethylaluminum ethoxychloride, butylaluminum butoxychloride, and ethylaluminum ethoxybromide.

(3) Electron donor compound (component (c))

The electron donor compound as component (c) is generally referred to as an "external electron donor compound." One embodiment of the catalyst comprises component (c), and another embodiment of the catalyst does not comprise component (c).

Such an electron donor compound is preferably an organosilicon compound. Preferred examples of the organosilicon compound include:
trimethylmethoxysilane, trimethylethoxysilane, dimethyldimethoxysilane, dimethyldiethoxysilane, diisopropyldimethoxysilane, t-butylmethyldimethoxysilane, t-butylmethyldiethoxysilane, t-amylmethyldiethoxysilane, diphenyldimethoxysilane, phenylmethyldimethoxysilane, diphenyldiethoxysilane, bis-o-tolyldimethoxysilane, bis-m-tolyldimethoxysilane, bis-p-tolyldimethoxysilane, bis-p-tolyldiethoxysilane, bis-ethylphenyldimethoxysilane, dicyclopentyldimethoxysilane, dicyclohexyldimethoxysilane, cyclohexylmethyldimethoxysilane, cyclohexylmethyldiethoxysilane, ethyltrimethoxysilane, ethyltriethoxysilane, vinyltrimethoxysilane, methyltrimethoxysilane, n-propyltriethoxysilane, decyltrimethoxysilane, decyltriethoxysilane, phenyltrimethoxysilane, γ-chloropropyltrimethoxysilane, methyltriethoxysilane, ethyltriethoxysilane, vinyltriethoxysilane, t-butyltriethoxysilane, thexyltrimethoxysilane, n-butyltriethoxysilane, iso-butyltriethoxysilane, phenyltriethoxysilane, γ-aminopropyltriethoxysilane, chlorotriethoxysilane, ethyltriisopropoxysilane, vinyltributoxysilane, cyclohexyltrimethoxysilane, cyclohexyltriethoxysilane, 2-norbornanetrimethoxysilane, 2-norbornanetriethoxysilane, 2-norbornanemethyldimethoxysilane, ethyl silicate, butyl silicate, trimethylphenoxysilane, methyltriallyloxysilane, vinyltris(β-methoxyethoxysilane), vinyltriacetoxysilane, dimethyltetraethoxydisiloxane, methyl(3,3,3-trifluoro-n-propyl)dimethoxysilane, cyclohexylethyldimethoxysilane, cyclopentyl-t-butoxydimethoxysilane, diisobutyldimethoxysilane, isobutylisopropyldimethoxysilane, n-propyltrimethoxysilane, di-n-propyldimethoxysilane, texyltrimethoxysilane, t-butylethyldimethoxysilane, t-butylpropyldimethoxysilane, t-butyl-t-butoxydimethoxysilane, isobutyltrimethoxysilane, cyclohexylisobutyldimethoxysilane, di-sec-butyldimethoxysilane, isobutylmethyldimethoxysilane, bis(decahydroisoquinolin-2-yl)dimethoxysilane, diethylaminotriethoxysilane, dicyclopentyl-bis(ethylamino)silane, tetraethoxysilane, tetramethoxysilane, and isobutyltriethoxysilane.

Particularly preferred are ethyltriethoxysilane, n-propyltriethoxysilane, n-propyltrimethoxysilane, t-butyltriethoxysilane, t-butylmethyldimethoxysilane, t-butylmethyldiethoxysilane, t-butylethyldimethoxysilane, t-butylpropyldimethoxysilane, t-butyl-t-butoxydimethoxysilane, t-butyltrimethoxysilane, i-butyltrimethoxysilane, isobutylmethyldimethoxysilane, i-butyl-sec-butyldimethoxysilane, ethyl(perhydroisoquinolin-2-yl)dimethoxysilane, bis(decahydroisoquinolin-2-yl)dimethoxysilane, tri(isopropenyloxy)phenylsilane, thexyltrimethoxysilane, vinyltriethoxysilane, phenyltriethoxysilane, phenyltrimethoxysilane, vinyltributoxysilane, diphenyldimethoxysilane, diisopropyldimethoxysilane, diisobutyldimethoxysilane, i-butyl-i-propyldimethoxysilane, cyclopentyl-t-butoxydimethoxysilane, dicyclopentyldimethoxysilane, cyclohexylmethyldimethoxysilane, cyclohexyl-i-butyldimethoxysilane, cyclopentyl-i-butyldimethoxysilane, cyclopentylisopropyldimethoxysilane, di-sec-butyldimethoxysilane, diethylaminotriethoxysilane, tetraethoxysilane, tetramethoxysilane, isobutyltriethoxysilane, phenylmethyldimethoxysilane, phenyltriethoxysilane, bis-p-tolyldimethoxysilane, p-tolylmethyldimethoxysilane, dicyclohexyldimethoxysilane, cyclohexylethyldimethoxysilane, 2-norbornanetriethoxysilane, 2-norbomanemethyldimethoxysilane, diphenyldiethoxysilane, methyl(3,3,3-trifluoropropyl)dimethoxysilane, ethyl silicate, and the like.

(4) Polymerization

The starting monomers are polymerized by contacting them with the catalyst prepared as described above. In this process, it is preferred that pre-polymerization be firstly performed using the above-described catalyst. Pre-polymerization is a step at which a polymer chain serving as a foothold for subsequent main polymerization of the starting monomers is formed on a solid catalyst component. Pre-polymerization can be performed by a known method. Pre-polymerization is generally performed at not more than 40°C, preferably at not more than 30°C, more preferably at not

more than 20°C. Then, the prepolymerized catalyst is introduced into a polymerization reaction system to perform main polymerization of the starting monomers. Main polymerization is preferably performed by polymerizing the starting monomer of component (1) and the starting monomer of component (2) using two or more reactors. The polymerization can be performed in a liquid phase, a gas phase, or a liquid/gas phase. The polymerization temperature is preferably in the range of normal temperature to 150°C, more preferably in the range of 40°C to 100°C. The polymerization pressure is preferably in the range of 3.3 to 6.0 MPa for polymerization in a liquid phase, or preferably in the range of 0.5 to 3.0 MPa for polymerization in a gas phase. A conventional molecular weight regulator known in the art, such as chain transfer agent (e.g., hydrogen or $ZnEt_2$), may be used.

Moreover, a polymerization apparatus having gradients in monomer concentration or polymerization conditions may be used. For example, the monomers can be polymerized in a gas phase using such an apparatus having at least two interconnected polymerization zones. More specifically, in the presence of a catalyst, monomers are fed to a polymerization zone consisting of a riser and are polymerized in said zone, while monomers are also fed to a downcomer connected to the riser and are polymerized in said zone, and then as the monomers are circulated between the riser and downcomer, a polymer product is collected. This method includes a means for totally or partially preventing a gas mixture present in the riser from entering the downcomer. Further, a gas or liquid mixture that is different in chemical constitution from the gas mixture present in the riser is introduced into the downcomer. The aforementioned polymerization method can be performed by following, for example, the method disclosed in International Patent Application Domestic Publication No. JP 2002-520426.

3. Application

The polypropylene composition of the present invention is the most suitable for use as a resin composition for injection molding. Since the polypropylene composition of this invention is excellent in flowability, this composition can be injection-molded into a molded article having a thickness of 0.5 to 3 mm. The inventive polypropylene composition is preferred to have the physical properties described below.

1) Haze: JIS K7136

The polypropylene composition of the present invention has a haze value of preferably not more than 20%, more preferably not more than 15%, when the composition injection-molded into a 1 mm-thick flat plate is measured. The lower limit of the haze value is not limited, but is generally not less than about 1%. The lower the haze value, the more excellent the transparency.

2) Low temperature impact resistance

The polypropylene composition of the present invention preferably has a puncture resistance (at -20°C) of not less than 15 J.

3) Stiffness

The polypropylene composition of the present invention has a flexural modulus of preferably more than 800 MPa, more preferably not less than 820 MPa, still more preferably not less than 830 MPa.

Since the polypropylene composition of the present invention has the aforementioned physical properties, this composition is useful for packaging application, and particularly useful for use as containers and their lids used at low temperatures like -20°C. The polypropylene composition of this invention can be directly injection-molded into a final product, or can also be made into a thin-wall article such as sheet by extruding or injection-molding and then into a final product by providing the thin-wall article to a secondary processing such as vacuum forming or pressure forming. However, the application of the polypropylene composition of this invention is not limited to the foregoing, and this composition is also useful for use as general miscellaneous goods, for example.

Examples

[Example 1]

A Ziegler-Natta catalyst was produced according to Example 1 of International Patent Publication No. WO 2009/050045. However, at the time of the first temperature elevation, the temperature was elevated not to 100°C but to 110°C. The thus-produced catalyst component was brought into contact with triethylaluminium (TEAL) and the external electron donor component, dicyclopentyldimethoxysilane (DCPMS), at 12°C for 24 minutes. The weight ratio of TEAL

to the solid catalyst component was 20, and the weight ratio of TEAL to DCPMS was 10. The thus-obtained catalyst system, before introduced into a first-stage polymerization reactor, was subjected to pre-polymerization by keeping it suspended in liquid propylene at 20°C for about 5 minutes. The resulting prepolymerized product was introduced into a first-stage polymerization reactor in a polymerization apparatus having two stages of polymerization reactors connected in series, and then ethylene was fed to the propylene in liquid phase to thereby produce a propylene/ethylene random copolymer as component (1). In a second-stage gas-phase polymerization reactor, ethylene and propylene were fed to produce an ethylene/propylene copolymer as component (2). During the polymerization, the temperature and pressure were adjusted, and hydrogen was used as a molecular weight regulator.

As for polymerization temperatures and relative proportions of reactants, the polymerization temperature, hydrogen concentration, and ethylene concentration in the first-stage reactor were 75°C, 0.46 mol.%, and 0.80 mol.%, respectively; and the polymerization temperature, H2/C2 molar ratio, and C2/(C2+C3) molar ratio in the second-stage reactor were 80°C, 0.56, and 0.71, respectively. Also, the residence time distributions at the first and second stages were adjusted so as to ensure that the amount of component (2) obtained was 13% by weight. To 100 parts by weight of the resulting resin components, 0.2 parts by weight of a crystal nucleating agent, *i.e.,* Millad 3988 (sorbitol nucleating agent) produced by Milliken Chemical, 0.2 parts by weight of an antioxidant, *i.e.,* B225 produced by BASF, and 0.05 parts by weight of a neutralizer, *i.e.,* calcium stearate produced by Tannan Kagaku Kogyo Co., Ltd., were added, and the contents were stirred and mixed for 1 minute using a Henschel mixer. The mixture was extruded at a cylinder temperature of 230°C using an NVC φ50 mm single-screw extruder produced by Nakatani Machinery Ltd., and the extruded strands were cooled in water and cut by a pelletizer to obtain a polypropylene composition in a pellet form. This composition was evaluated by the procedure described later. The results are shown in Table 1.

[Example 2]

A polypropylene composition was produced and evaluated by the same procedure as in Example 1, except that the hydrogen concentration in the first-stage reactor was changed to 0.41 mol.% and the H2/C2 and C2/(C2+C3) molar ratios in the second-stage reactor were changed to 0.65 and 0.79, respectively.

[Example 3]

A polypropylene composition was produced and evaluated by the same procedure as in Example 1, except that a Ziegler-Natta catalyst component was produced according to the disclosures in European Patent No. EP 728769, Example 5, lines 48-55, the hydrogen and ethylene concentrations in the first-stage reactor were changed to 0.56 mol.% and 0.89 mol.%, respectively, and the H2/C2 and C2/(C2+C3) molar ratios in the second-stage reactor were changed to 0.48 and 0.69, respectively.

[Example 4]

A polypropylene composition was produced and evaluated by the same procedure as in Example 3, except that the hydrogen concentration in the first-stage reactor was changed to 0.48 mol.%, and the H2/C2 and C2/(C2+C3) molar ratios in the second-stage reactor were changed to 0.65 and 0.81, respectively.

[Example 5]

A polypropylene composition was produced and evaluated by the same procedure as in Example 3, except that the hydrogen and ethylene concentrations in the first-stage reactor were changed to 0.30 mol.% and 0.53 mol.%, respectively, the H2/C2 and C2/(C2+C3) molar ratios in the second-stage reactor were changed to 0.56 and 0.83, respectively, and the residence time distributions at the first and second stages were adjusted so as to obtain ensure that the amount of component (2) obtained was 15% by weight.

[Example 6]

A polypropylene composition was produced and evaluated by the same procedure as in Example 4, except that the hydrogen concentration in the first-stage reactor was changed to 0.37 mol.%, and the C2/(C2+C3) molar ratio in the second-stage reactor was changed to 0.89.

[Example 7]

A polypropylene composition was produced and evaluated by the same procedure as in Example 3, except

that the hydrogen concentration in the first-stage reactor was changed to 0.39 mol.%, the H2/C2 and C2/(C2+C3) molar ratios in the second-stage reactor were changed to 0.76 and 0.83, respectively, and the residence time distributions at the first and second stages were adjusted so as to ensure that the amount of component (2) obtained was 12% by weight.

[Comparative Example 1]

A polypropylene composition was produced and evaluated by the same procedure as in Example 1, except that the hydrogen and ethylene concentrations in the first-stage reactor were changed to 0.33 mol.% and 0.36 mol.%, respectively, the H2/C2 and C2/(C2+C3) molar ratios in the second-stage reactor were changed to 0.48 and 0.77, respectively, and the residence time distributions at the first and second stages were adjusted so as to ensure that the amount of component (2) obtained was 12% by weight.

[Comparative Example 2]

A polypropylene composition was produced and evaluated by the same procedure as in Example 1, except that the hydrogen and ethylene concentrations in the first-stage reactor were changed to 0.51 mol.% and 1.02 mol.%, respectively, and the C2/(C2+C3) molar ratio in the second-stage reactor was changed to 0.77. In this example, it was difficult to obtain a composition qualified for injection molding evaluation, since polymer particles in the plant equipment easily adhered to each other or to an inner wall of the equipment during polymer production.

[Comparative Example 3]

A polypropylene composition was produced and evaluated by the same procedure as in Example 7, except that the hydrogen concentration in the first-stage reactor was changed to 0.42 mol.%, and in the second-stage reactor, 1-butene was fed instead of propylene and the H2/C2 and C2/(C2+C4) molar ratios were changed to 0.35 and 0.60, respectively. In this example, the productivity was lower than in the case of using propylene in the second-stage reactor.

[Comparative Example 4]

A polypropylene composition was produced and evaluated by the same procedure as in Example 4, except that the hydrogen concentration in the first-stage reactor was changed to 0.46 mol.%, the C2/(C2+C3) molar ratio in the second-stage reactor was changed to 0.86, and the residence time distributions at the first and second stages were adjusted so as to ensure that the amount of component (2) obtained was 8% by weight.

[Comparative Example 5]

A polypropylene composition was produced and evaluated by the same procedure as in Example 1, except that the hydrogen and ethylene concentrations in the first-stage reactor were changed to 0.36 mol.% and 0.66 mol.%, respectively, and the residence time distributions at the first and second stages were adjusted so as to ensure that the amount of component (2) obtained was 23% by weight.

[Comparative Example 6]

A polypropylene composition was produced and evaluated by the same procedure as in Example 4, except that the H2/C2 and C2/(C2+C3) molar ratios in the second-stage reactor were changed to 0.56 and 0.64, respectively.

[Comparative Example 7]

A polypropylene composition was produced and evaluated by the same procedure as in Example 2, except that the hydrogen concentration in the first-stage reactor was changed to 0.35 mol.%, the C2/(C2+C3) molar ratio in the second-stage reactor was changed to 0.86, and the residence time distributions at the first and second stages were adjusted so as to ensure that the amount of component (2) obtained was 14% by weight.

[Comparative Example 8]

A polypropylene composition was produced and evaluated by the same procedure as in Example 7, except that the H2/C2 and C2/(C2+C3) molar ratios in the second-stage reactor were changed to 1.23 and 0.86, respectively. In this example, the XSIV value was close to the production threshold, so that it was difficult to stably obtain a polymer.

[Comparative Example 9]

A polypropylene composition was produced and evaluated by the same procedure as in Example 3, except that the H2/C2 and C2/(C2+C3) molar ratios in the second-stage reactor were changed to 0.14 and 0.76, respectively.

[Comparative Example 10]

A polypropylene composition was produced and evaluated by the same procedure as in Example 4, except that the hydrogen and ethylene concentrations in the first-stage reactor were changed to 0.11 mol.% and 0.84 mol.%, respectively, and the C2/(C2+C3) molar ratio in the second-stage reactor was changed to 0.81. In this example, no evaluation of physical properties was conducted, since the resulting composition was low in MFR and difficult to injection-mold.

[Comparative Example 11]

A polypropylene composition was produced and evaluated by the same procedure as in Comparative Example 6, except that the hydrogen concentration in the first-stage reactor was changed to 0.84 mol.%, and the C2/(C2+C3) molar ratio in the second-stage reactor was changed to 0.86.

[Comparative Example 12]

A polypropylene composition was produced and evaluated by the same procedure as in Example 1, except that the hydrogen concentration in the first-stage reactor was changed to 0.38 mol.%, the H2/C2 and C2/(C2+C3) molar ratios in the second-stage reactor were changed to 0.48 and 0.77, respectively, and no crystal nucleating agent was added.

[Comparative Example 13]

A comparative polypropylene composition was produced and evaluated according to the procedure disclosed in Example 1 of PTL 2.

[Measurement conditions]

1) MFR

MFR measurement was done at a temperature of 230°C under a load of 2.16 kg according to JIS K7210-1.

2) Ethylene-derived unit content in component (1) and ethylene-derived unit content in component (2)

The samples were dissolved in a mixed solvent of 1,2,4-trichlorobenzene and deuterated benzene, and measured for these contents by the $^{13}$C-NMR method using JNM LA-400 ($^{13}$C resonant frequency: 100 MHz) produced by JEOL Ltd.

3) Intrinsic viscosity of xylene solubles (XSIV) of polypropylene composition

Xylene solubles were obtained from the polypropylene resin samples and measured for their intrinsic viscosity (XSIV) by following the procedure described below.
First, 2.5 g of a polypropylene sample was put into a flask containing 250 mL of o-xylene (solvent), and the contents were stirred at 135°C for 30 minutes under nitrogen purging using a hot plate and a reflux condenser, whereby the composition was dissolved completely; thereafter, the solution was cooled at 25°C for one hour. The resulting solution was filtered through paper filter. 100 mL of the filtrate obtained after filtration was collected, transferred to an aluminum cup or the like, evaporated to dryness at 140°C under nitrogen purging, and left to stand at room temperature for 30 minutes, whereby xylene solubles were obtained.
Intrinsic viscosity measurement was done in tetrahydronaphthalene at 135°C using an automatic capillary viscometer (SS-780-H1, produced by Shibayama Scientific Co., Ltd.).

4) Intrinsic viscosity (IV) of component (1)

Component (1) was separately synthesized under the conditions for the first-stage reactor, and measured for

its intrinsic viscosity (IV) in tetrahydronaphthalene at 135°C using an automatic capillary viscometer (SS-780-H1, produced by Shibayama Scientific Co., Ltd.).

5) Haze

A flat plate of 100 mm×100 mm×0.5 mm was made from each of the polypropylene composition samples using an injection molding machine (FANUC ROBOSHOT α100C produced by Fanuc Corporation) under the following conditions: molten resin temperature, 250°C; mold temperature, 40°C; average injection speed, 35 mm/sec.; hold pressure time, 5 sec.; and total cycle time, 43 sec. The thus-produced test pieces were measured for their haze by a haze meter (HM-150 produced by Murakami Color Research Laboratory Co., Ltd.) according to JIS K7136.

6) Puncture resistance

A flat plate of 130 mm×130 mm×2.0 mm was made from each of the polypropylene composition samples using an injection molding machine (FANUC ROBOSHOT α100C produced by Fanuc Corporation) under the following conditions: molten resin temperature, 230°C; mold temperature, 40°C; average injection speed, 35 mm/sec.; hold pressure time, 10 sec.; and total cycle time, 45 sec. With the use of Hydroshot HITS-P10 produced by Shimadzu Corporation, each test piece for measurement was placed on a support with a hole of 40 mmφ internal diameter in a thermostatic bath controlled at -20°C, secured with a sample holder of 76 mmφ internal diameter, and then struck by a striker of 12.7 mmφ diameter with a hemispherical striking face at an impact velocity of 1 m/sec. to determine puncture energy (J) according to JIS K7211-2. An average of the puncture energy values obtained for four test pieces was calculated as a puncture resistance and used as an index for low temperature impact resistance.

7) Blush resistance

After the samples were tested for puncture resistance at 0°C, the tested samples were visually observed to see if they were whitened, and evaluated based on the following criteria.

A: Not whitened
X: Whitened

8) Flexural modulus

According to JIS K6921-2, multi-purpose test pieces (type A1) as per JIS K7139 were injection-molded from each of the polypropylene composition samples using an injection molding machine (FANUC ROBOSHOT S2000i produced by Fanuc Corporation) under the following conditions: molten resin temperature, 200°C; mold temperature, 40°C; average injection speed, 200 mm/sec.; hold pressure time, 40 sec.; and total cycle time, 60 sec. The injection-molded samples were processed into a dimension of 10 mm wide, 4 mm thick and 80 mm long to obtain test pieces (type B2) for measurement. The type B2 test pieces were measured for flexural modulus using a precision universal testing machine (Autograph AG-X 10kN) produced by Shimadzu Corporation under the following conditions: temperature, 23°C; relative humidity, 50%; length of span between supports, 64 mm; and test speed, 2 mm/min.

9) Spiral flow

Molding flowability was evaluated by spiral flow testing.
The values of spiral flow were determined by measuring the flow length of injection-molded articles obtained using an injection molding machine (α100C produced by Fanuc Corporation) equipped with a spiral flow mold (flow path cross-sectional profile: a trapezoid with an upper base length of 9.5 mm, a lower base length of 10 mm, and a height of 1 mm) having an Archimedes spiral formed thereon. The molding conditions were as follows.

Cylinder temperature: 250°C
Mold temperature: 40°C
Injection pressure: 76.5 MPa
Injection speed: 10 mm/sec.
Hold pressure: 73.5 to 74.5 MPa (for 3 sec.)
Cooling time: 10 sec.

10) Ease of production

The ease of production of the polypropylene composition samples in a polymer production plant used to produce them was evaluated based on the following criteria.

A: Comparable to conventional polypropylene compositions
B: Inferior to conventional polypropylene compositions
C: Difficult to produce industrially
D: Unable to produce industrially

[Table 1]

| | Examples | | | | | | |
|---|---|---|---|---|---|---|---|
| | 1 | 2 | 3 | 4 | 5 | 6 | 7 |
| Catalyst [1)] | Suc | Suc | Ph | Ph | Ph | Ph | Ph |
| Ethylene content in component (1) (wt.%) | 3.4 | 3.4 | 3.5 | 3.4 | 2.0 | 3.4 | 3.5 |
| IV of component (1) (dL/g) | 1.5 | 1.6 | 1.6 | 1.6 | 1.7 | 1.7 | 1.7 |
| MFR of component (1) (g/10 min) | 12 | 10 | 11 | 9.5 | 6.9 | 6.9 | 7.6 |
| Type of component (2) [2)] | C2C3 | C2C3 | C2C3 | C2C3 | C2C3 | C2C3 | C2C3 |
| Content of component (2) (wt.%) | 13 | 13 | 13 | 13 | 15 | 13 | 12 |
| Ethylene content in component (2) (wt.%) | 75 | 83 | 69 | 80 | 81 | 86 | 81 |
| XSIV (dl/g) | 1.1 | 1.0 | 1.2 | 10 | 1.1 | 1.0 | 0.9 |
| MFR (g/10 min) | 14 | 13 | 13 | 12 | 9 | 9 | 10 |
| Viscosity ratio | 0.73 | 0.63 | 0.75 | 0.63 | 0.65 | 0.59 | 0.53 |
| Crystal nucleating agent Millad 3988 (parts by wt.) | 0.2 | 0.2 | 0.2 | 0.2 | 0.2 | 0.2 | 0.2 |
| Ease of production | A | A | A | A | A | A | A |
| Haze (%) | 11 | 12 | 13 | 13 | 15 | 14 | 11 |
| Puncture resistance @ -20°C (J) | 29 | 29 | 24 | 19 | 20 | 19 | 22 |
| Flexural modulus (MPa) | 830 | 840 | 880 | 910 | 1100 | 900 | 860 |
| Blush resistance | A | A | A | A | A | A | A |
| Spiral flow (cm) | 26.7 | 26.3 | 25.2 | 24.6 | 23.1 | 23.0 | 23.6 |
| 1) Suc: Catalyst using a succinate compound Ph: Catalyst using a phthalate compound | | | | | | | |
| 2) C2C3: Ethylene/propylene copolymer C2C4: Ethylene/1-butene copolymer | | | | | | | |

| | Comparative Examples | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| Catalyst [1)] | Suc | Suc | Ph | Ph | Suc | Ph | Suc | Ph | Ph | Ph | Ph | Suc | Ph |
| Ethylene content in component (1) (wt%) | 1.5 | 4.3 | 3.5 | 3.5 | 2.5 | 3.5 | 3.5 | 3.4 | 3.5 | 3.3 | 3.5 | 3.4 | 3.2 |
| IV of component (1) (dL/g) | 1.6 | 1.6 | 1.7 | 1.6 | 1.6 | 1.6 | 1.7 | 1.7 | 1.5 | 2.2 | 1.4 | 1.7 | 1.4 |

(continued)

| | Comparative Examples | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| MFR of component (1) (g/10 min) | 11 | 11 | 8.1 | 8.6 | 11 | 9.9 | 7.6 | 7.6 | 12 | 2.1 | 19 | 8.4 | 20 |
| Type of component (2) 2) | C2C3 | C2C3 | C2C4 | C2C3 | C2C3 | C2C3 | C2C3 | C2C3 | C2C3 | C2C3 | C2C3 | C2C3 | C2C3 |
| Content of component (2) (wt%) | 12 | 13 | 12 | 8 | 23 | 13 | 14 | 12 | 13 | 13 | 13 | 13 | 15 |
| Ethylene content in component (2) (wt%) | 81 | 80 | 81 | 82 | 74 | 64 | 89 | 83 | 74 | 79 | 82 | 81 | 80 |
| XSIV (dl/g) | 1.2 | 1.1 | 0.8 | 1.0 | 1.1 | 1.1 | 1.0 | 0.6 | 2.0 | 1.0 | 1.1 | 1.2 | 1.2 |
| MFR (g/10 min) | 13 | 13 | 11 | 10 | 15 | 12 | 10 | 11 | 10 | 3 | 22 | 10 | 22 |
| Viscosity ratio | 0.75 | 0.69 | 0.47 | 0.63 | 0.69 | 0.69 | 0.59 | 0.35 | 1.33 | 0.45 | 0.79 | 0.71 | 0.86 |
| Crystal nucleating agent Millad 3988 (parts by wt) | 0.2 | 0.2 | 0.2 | 0.2 | 0.2 | 0.2 | 0.2 | 0.2 | 0.2 | 0.2 | 0.2 | - | 0.18 (wt%) |
| Ease of production | A | D | B | A | A | A | A | C | A | A | A | A | A |
| Haze (%) | 12 | - | 10 | 9 | 25 | 22 | 18 | 10 | 87 | - | 13 | 26 | 16 |
| Puncture resistance @ -20°C (J) | 12 | - | 22 | 8 | 30 | 26 | 13 | 12 | 11 | - | 13 | 26 | 20 |
| Flexural modulus (MPa) | 1340 | - | 850 | 920 | 910 | 860 | 920 | 850 | 800 | - | 890 | 750 | 800 |
| Blush resistance | A | - | A | A | A | A | A | A | A | - | A | A | A |
| Spiral flow (cm) | 26.4 | - | 24.2 | 23.7 | 27.2 | 24.5 | 24.9 | 24.2 | 23.6 | 16.8 | 28.1 | 24.7 | 28.5 |
| 1) Suc: Catalyst using a succinate compound Ph: Catalyst using a phthalate compound | | | | | | | | | | | | | |
| 2) C2C3: Ethylene/propylene copolymer C2C4: Ethylene/1-butene copolymer | | | | | | | | | | | | | |

As shown in Table 1, the polypropylene composition of the present invention is excellent in a balance between transparency, low temperature impact resistance and stiffness. Further, the polypropylene composition of this invention is excellent in ease of production and thus advantageous from an economical point of view.

## Claims

1. A polypropylene composition comprising:

   as component (1), a propylene/ethylene copolymer containing more than 1.5% by weight and not more than 4% by weight of an ethylene-derived unit;
   as component (2), an ethylene/propylene copolymer containing 65 to 87% by weight of an ethylene-derived unit; and
   0.01 to 0.5 parts by weight of a crystal nucleating agent, based on a total of 100 parts by weight of component (1) and component (2);
   wherein the polypropylene composition satisfies the following requirements:

   1) the weight ratio of component (1) to component (2) is in the range of 80:20 to 90:10,
   2) the intrinsic viscosity of xylene solubles (XSIV) of the composition is in the range of 0.8 to 1.4 dl/g,
   3) the MFR (at 230°C under a load of 2.16 kg) of the composition is in the range of 5 to 15 g/10 min.,
   4) the viscosity ratio defined below is in the range of 0.40 to 0.80:

$$\text{Viscosity ratio} = \frac{\text{XSIV as defined above}}{\text{Intrinsic viscosity of component (1)}}$$

   wherein the intrinsic viscosity of component (1) is measured according to the description.

2. The polypropylene composition according to claim 1, wherein the ethylene-derived unit in component (1) is present at a concentration of 1.8 to 4% by weight.

3. The polypropylene composition according to claim 1 or 2, wherein the viscosity ratio defined above is preferably in the range of 0.45 to 0.75, more preferably 0.50 to 0.70.

4. The polypropylene composition according to any of claims 1 to 3, wherein components (1) and (2) are copolymers obtained by polymerizing propylene and ethylene using a catalyst comprising:

   (a) a solid catalyst comprising, as essential components, magnesium, titanium, a halogen, and an electron donor compound selected from succinate-based compounds, and
   (b) an organoaluminum compound and
   (c) optionally an external electron donor compound.

5. An injection-molded article of the polypropylene composition according to any of claims 1 to 4.

## Patentansprüche

1. Polypropylenzusammensetzung, umfassend:

   als Komponente (1) ein Propylen/Ethylen-Copolymer, das mehr als 1,5 Gew.% und nicht mehr als 4 Gew.% einer von Ethylen abgeleiteten Einheit enthält;
   als Komponente (2) ein Ethylen/Propylen-Copolymer, das 65 bis 87 Gew.% einer von Ethylen abgeleiteten Einheit enthält; und
   0,01 bis 0,5 Gewichtsteile eines Kristallkeimbildners, bezogen auf insgesamt 100 Gewichtsteile von Komponente (1) und Komponente (2);
   wobei die Polypropylenzusammensetzung die folgenden Anforderungen erfüllt:

1) das Gewichtsverhältnis von Komponente (1) zu Komponente (2) liegt im Bereich von 80:20 bis 90:10,
2) die Grenzviskosität der in Xylol löslichen Materialien (XSIV) der Zusammensetzung liegt im Bereich von 0,8 bis 1,4 dl/g,
3) die MFR (bei 230 °C unter einer Last von 2,16 kg) der Zusammensetzung liegt im Bereich von 5 bis 15 g/10 min.,
4) das nachfolgend definierte Viskositätsverhältnis liegt im Bereich von 0,40 bis 0, 80:

$$\text{Viskositätsverhältnis} = \frac{\textbf{XSIV}\text{ wie oben definiert}}{\text{Grenzviskosität von Komponente (1)}}$$

wobei die Grenzviskosität von Komponente (1) gemäß der Beschreibung gemessen wird.

**2.** Polypropylenzusammensetzung nach Anspruch 1, wobei die von Ethylen abgeleitete Einheit in Komponente (1) in einer Konzentration von 1,8 bis 4 Gew.% vorhanden ist.

**3.** Polypropylenzusammensetzung nach Anspruch 1 oder 2, wobei das oben definierte Viskositätsverhältnis vorzugsweise im Bereich von 0,45 bis 0,75, bevorzugter 0,50 bis 0,70 liegt.

**4.** Polypropylenzusammensetzung nach einem der Ansprüche 1 bis 3, wobei die Komponenten (1) und (2) Copolymere sind, die durch Polymerisieren von Propylen und Ethylen unter Verwendung eines Katalysators erhalten wurden, welcher umfasst:

(a) einen festen Katalysator, umfassend als essentielle Komponenten Magnesium, Titan, ein Halogen und eine Elektronendonorverbindung ausgewählt aus Verbindungen auf Succinatbasis, und
(b) eine Organoaluminiumverbindung und
(c) gegebenenfalls eine externe Elektronendonorverbindung.

**5.** Spritzgießartikel aus der Polypropylenzusammensetzung nach einem der Ansprüche 1 bis 4.

**Revendications**

**1.** Composition de polypropylène comprenant :

en tant que constituant (1), un copolymère de propylène/éthylène contenant plus de 1,5 % en poids et pas plus de 4 % en poids d'un motif dérivé d'éthylène ;
en tant que constituant (2), un copolymère d'éthylène/propylène contenant 65 à 87 % en poids d'un motif dérivé d'éthylène ; et
0,01 à 0,5 partie en poids d'un agent de nucléation de cristaux, sur la base d'un total de 100 parties en poids du constituant (1) et du constituant (2) ;
la composition de polypropylène satisfaisant aux exigences suivantes :

1) le rapport en poids du constituant (1) au constituant (2) est situé dans la plage de 80:20 à 90:10,
2) la viscosité intrinsèque des solubles dans le xylène (XSIV) de la composition est située dans la plage de 0,8 à 1,4 dl/g,
3) le MFR (à 230 °C sous une charge de 2,16 kg) de la composition est situé dans la plage de 5 à 15 g/10 min.,
4) le rapport de viscosité défini ci-dessous est situé dans la plage de 0,40 à 0,80 :

$$\text{Rapport de viscosité} = \frac{\text{XSIV tel que défini ci-dessus}}{\text{Viscosité intrinsèque du constituant (1)}}$$

la viscosité intrinsèque du constituant (1) étant mesurée selon la description.

**2.** Composition de polypropylène selon la revendication 1, le motif dérivé d'éthylène dans le constituant (1) étant présent à une concentration de 1,8 à 4 % en poids.

**3.** Composition de polypropylène selon la revendication 1 ou 2, le rapport de viscosité défini ci-dessus étant de préférence situé dans la plage de 0,45 à 0,75, plus préférablement de 0,50 à 0,70.

**4.** Composition de polypropylène selon l'une quelconque des revendications 1 à 3, les constituants (1) et (2) étant des copolymères obtenus par polymérisation de propylène et d'éthylène à l'aide d'un catalyseur comprenant :

(a) un catalyseur solide comprenant, en tant que constituants essentiels, du magnésium, du titane, un halogène et un composé donneur d'électrons choisi parmi des composés à base de succinate et
(b) un composé d'organoaluminium et
(c) éventuellement un composé donneur d'électrons externe.

**5.** Article moulé par injection de la composition de polypropylène selon l'une quelconque des revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012126829 A
- JP 2013507497 A
- EP 2746295 A1
- JP 2002542347 A
- WO 2009069483 A
- WO 2009057747 A
- JP 2005306910 A
- JP 2004131537 A
- JP 2013028704 A
- JP 2014201602 A
- JP 2013028705 A
- JP 4959920 B
- WO 2010078494 A
- JP 2002520426 A
- WO 2009050045 A
- EP 728769 A